# EUROPÄISCHE PATENTSCHRIFT

(11) **EP 0 516 959 B1**
(45) Veröffentlichungstag und Bekanntmachung des Hinweises auf die Patenterteilung: **11.10.1995**
(21) Anmeldenummer: 92106834.2
(22) Anmeldetag: 22.04.1992
(51) Int. Cl.: F16H 61/30

(54) **Hilfskraftbetätigte Gangschalteinrichtung**
Servo-assisted gear selector
Sélecteur de vitesses à servo-commande

(30) Priorität: 03.05.1991 DE 4114460
(43) Veröffentlichungstag der Anmeldung: 09.12.1992
(73) Patentinhaber: Volkswagen Aktiengesellschaft, 38436 Wolfsburg (DE)
(72) Erfinder: Schneider, Arthur, Ing. grad., W-3300 Braunschweig (DE)

(56) Entgegenhaltungen:
- EP-A- 0 129 632
- DE-A- 3 513 279
- GB-A- 1 061 175
- GB-A- 1 129 737

## Beschreibung

Die Erfindung betrifft eine Einrichtung zur automatischen Schaltung eines einem Antriebsmotor nachgeschalteten mehrgängigen Zahnrad-Wechselgetriebes für Fahrzeuge gemäß dem Oberbegriff des Patentanspruchs 1.

Es wird ausgegangen von einem üblichen Handschaltgetriebe. Die Schaltbewegung des Fahrers wird bei einem derartigen Getriebe über ein Gestänge, einen Seilzug oder dergleichen übertragen. Innerhalb des Getriebes ist eine Schaltachse vorgesehen, die zum einen in einer Schwenk- und zum anderen in einer Zug-Schub-Bewegung geführt wird. Zur Umstellung des Getriebes von manueller auf eine automatische Betätigung müssen nun die Bewegungen der Schaltachse durch entsprechende Schaltglieder gesteuert werden.

So ist beispielsweise aus der EP 0129 632 A1 ein hydraulische Betätigungsvorrichtung für ein mit einer Schaltachse eines Getriebes verbundenen Steuergliedes bekannt, bei dem dieses Steuerglied von zwei mit Rückstellmitteln versehenen hydraulischen Stellmitteln auslenkbar ist. Die Betätigungskolben dieser hydraulischen Stellmittel weisen Mittel zum Begrenzen des Verstellhubes der Kolben auf.

Aus der DE-OS 35 13 279 ist eine Einrichtung zur automatischen Schaltung bekannt, bei der die Schaltgassenwahl durch einen zweistufigen Druckzylinder erfolgt und das Einlegen der einzelnen Gänge (Gangwahl) über zwei mechanisch miteinander gekoppelte, entgegengesetzt wirkende Kolben-Zylinder-Anordnungen gesteuert wird. Die einzelnen Kolben arbeiten jeweils gegen den Druck einer Rückstellfeder. Die Bewegung der Schaltachse zum Herausnehmen eines eingelegten Ganges erfordert eine Bewegung beider Kolben und zwar zur gleichen Zeit. Dabei wird einer der Zylinder mit dem Druckmedium, etwa Hydraulikflüssigkeit, gefüllt und der andere entleert. Die Schaltbewegung erfordert dadurch eine gewisse Mindestzeit. Präzise und schnelle Schaltbewegungen sind nicht möglich.

Aufgabe der vorliegenden Erfindung ist es, die Wirkungsweise der bekannten Einrichtung zu verbessern, insbesondere Voraussetzungen für eine Präzisierung und Beschleunigung der Rückstellvorgänge zu schaffen.

Die Aufgabe wird gelöst durch die Merkmale des Patentanspruchs 1. Die beiden Kolben sind gemäß der Erfindung voneinander entkoppelt. Es kann ein Kolben bereits in die Neutralstellung zurückbewegt werden, während der andere, zum aufzufüllenden Zylinder gehörende Kolben sich noch in einer Schaltposition befindet. Besonders günstig einsetzbar ist die Erfindung in Verbindung mit einem selbsthaltenden Getriebe, wie es auch in der DE-OS 35 13 279 beschrieben ist, bei dem ein eingelegter Gang solange gehalten wird, bis das übertragene Moment ein bestimmtes Minimum unterschreitet und anschließend von selbst herausfällt. Das Herausnehmen des Ganges kann unterstützt werden durch den einen, noch nicht in der Neutralstellung befindlichen Kolben. Der andere Kolben ist bereits in seiner Neutralstellung und begrenzt oder behindert nicht mehr den zeitlichen Ablauf des Herausfallens oder Herausnehmens des alten Ganges.

Vorteilhafte Ausgestaltungen der Erfindung sind den Unteransprüchen zu entnehmen. Diese betreffen insbesondere konstruktive Einzelheiten der Kolben-Zylinder-Anordnung.

Im folgenden werden Ausführungsbeispiele der Erfindung anhand von Zeichnungen näher erläutert. Es zeigen:
- Figur 1: eine Draufsicht auf eine erfindungsgemäße Gangschalteinrichtung,
- Figur 2: einen Teil der Einrichtung gemäß Figur 1, nämlich eine Kolben-Zylinder-Anordnung zum Einlegen der Gänge in schematischer, aufgeschnittener Darstellung und zwar in Neutralstellung,
- Figur 3: die Kolben-Zylinder-Anordnung gemäß Figur 2, jedoch nach Betätigung des linken der beiden Kolben,
- Figur 4: die Kolben-Zylinder-Anordnung gemäß Figur 3, jedoch mit einem bereits wieder in seine Neutralstellung zurückgeführten linken Kolben und unter Beibehaltung der Position eines zuvor durch den Kolben bewegten Mitnehmerorgans,
- Figuren 5 bis 7: die Kolben-Zylinder-Anordnung entsprechend den Figuren 2 bis 4, jedoch mit einer Bewegung des Mitnehmerorgans in die entgegengesetzte Richtung.

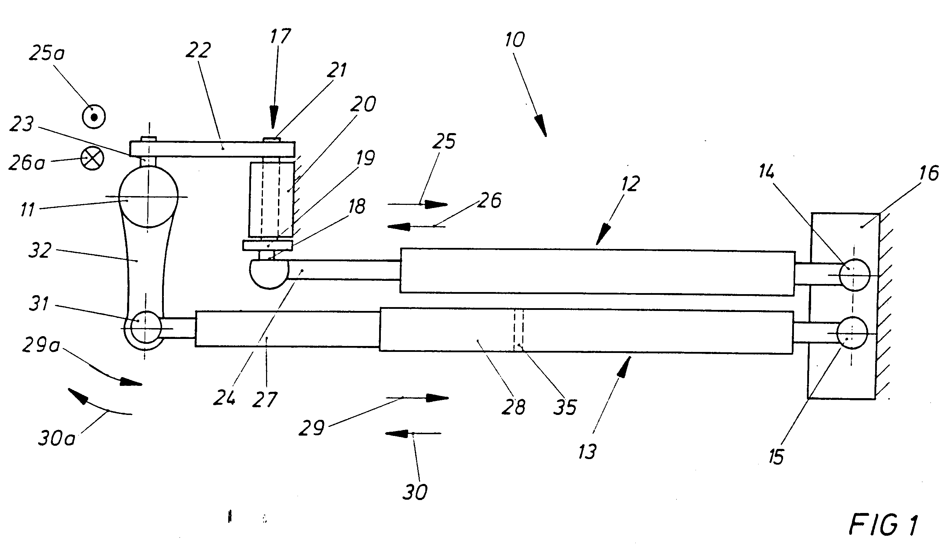

Figur 1 zeigt eine Gangschalteinrichtung 10 für ein automatisches Getriebe in der Draufsicht. Zur Bewegung einer Schaltachse 11 sind zwei separate Kolben-Zylinder-Anordnungen 12, 13 vorgesehen. Beide sind mit einem Ende 14 bzw. 15 schwenkbar an einem Flansch 16 des nicht gezeigten Getriebegehäuses gelagert. Die Kolben-Zylinder-Anordnung 12 ist zur Ausführung einer Zug- und Schub-Bewegung der Schaltachse 11 vorgesehen, während die andere Kolben-Zylinder-Anordnung 13 (im Bild die untere) eine Schwenkbewegung der Schaltachse 11 ausführt. Beide Anordnungen 12, 13 sind über nicht gezeigte Leitungen an ein Hydrauliksystem angeschlossen und werden von diesem versorgt. Die Übertragung der Bewegung auf die Schaltachse 11 erfolgt für die Zug-Schub-Bewegung über ein Gestänge 17 mit einer kurzen Drehachse 18, einem senkrecht zur Bildebene verlaufenden Hebel 19, einer weiteren in einem festen Lagerbock 20 angeordneten Drehachse 21, einem Schwenkhebel 22 und einer die Schaltachse 11 bewegenden Mitnehmeranordnung 23. Eine Bewegung der Kolbenstange 24 der Kolben-Zylinder-Anordnung 12 in Richtung des Pfeils 25, d. h. nach rechts, bewirkt nach Übertragung durch das Gestänge 17 eine Bewegung der Schaltachse 11 aus der Bildebene heraus. Die Bewegung der Schaltachse 11 ist angedeutet durch die als Punkt gezeichnete Pfeilspitze 25a. Bei einer Bewegung der Kolbenstange 24 in Gegenrichtung, nämlich in Richtung des Pfeils 26, bewegt sich die Schaltachse 11 entsprechend in die Bildebene hinein, dargestellt durch das Pfeilende 26a.

In ähnlicher Weise sind die Bewegungen der Kolben-Zylinder-Anordnung 13 zum Einlegen eines Ganges dargestellt. Bei einer Verschiebung des schmaleren Gehäuses 27 in dem dieses umfassenden Teilgehäuse 28 in Richtung des Pfeils 29 wird die Schaltachse 11 in Richtung des Pfeils 29a geschwenkt bzw. verdreht. Entsprechend erfolgt eine Schwenkbewegung in Richtung des Pfeils 30a bei einer Verschiebung des Gehäuses 27 in Richtung des Pfeils 30. Die Bewegung des Gehäuses 27 wird über einen Anlenkpunkt 31 und einen Hebelarm 32 auf die Schaltachse übertragen.

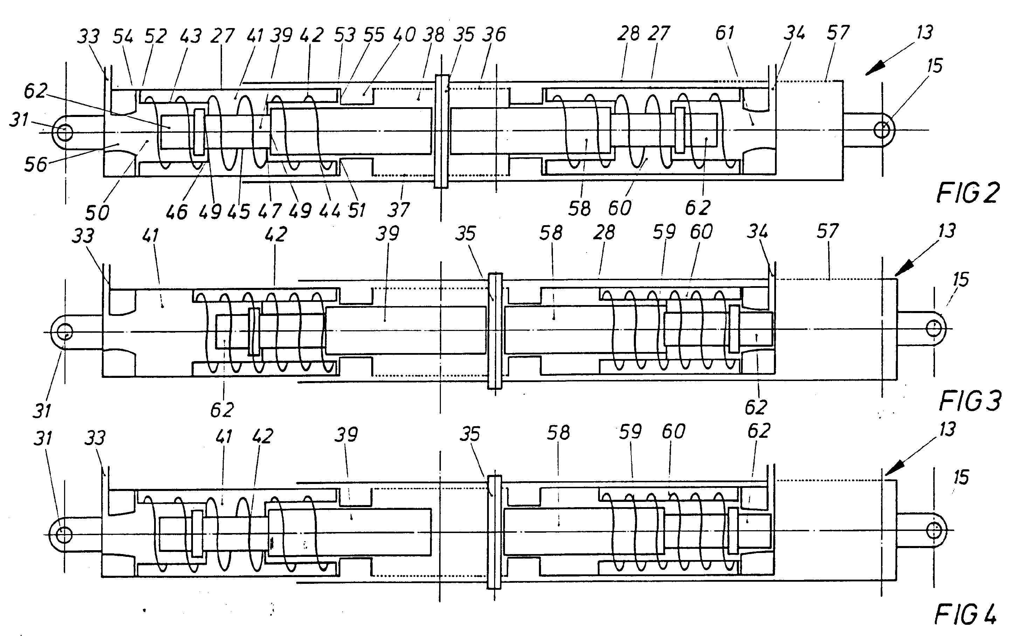

Die Kolben-Zylinder-Anordnung 13, siehe auch Fig. 2 - 7, ist als Schaltglied für das Einlegen bzw. Herausnehmen der einzelnen Gänge nach Anwahl der entsprechenden Schaltgasse durch die andere Kolben-Zylinder-Anordnung 12 gedacht. Dabei kommt es auf eine hohe Präzision der Schaltbewegung an. Insbesondere soll das Herausnehmen der einzelnen Gänge in möglichst kurzer Zeit durchgeführt werden können. Die Kolben-Zylinder-Anordnung 13 ist zu diesem Zweck in besonderer Weise aufgebaut. Das Gehäuse 27 erstreckt sich zwischen Zuleitungen 33, 34 mit zwei zueinander symmetrischen Hälften. Mittig im Gehäuse 27 ist ein als Querbolzen 35 ausgebildetes Mitnehmerorgan vorgesehen. Der Querbolzen 35 ist dabei in schraffiert angedeuteten Langlöchern 36, 37 im Bereich eines Leerraums 38 verschiebbar gehalten.

Im folgenden wird der Teil des Gehäuses 27 links vom Querbolzen 35 gemäß Figur 2 näher erläutert. Ein Kolben 39 ist innerhalb der linken Hälfte des Gehäuses 27 in dessen Längsrichtung verschiebbar gelagert. Ein an den Leerraum 38 anschließender und sich nach innen erstreckender Vorsprung 40 wirkt als Führung und zugleich als Abdichtung für den Kolben 39. Links davon ist ein Druckraum 41 vorgesehen, der sich von der Zuleitung 33 bis zum Vorsprung 40 erstreckt. Der Kolben 39 wird durch eine als Rückstellelement wirkende Druckfeder 42 in der Position gemäß Figur 2 gehalten. um die Federcharakteristik einer möglichst langen Druckfeder nutzen zu können, ist diese in mit dem Kolben 39 korrespondierende Federtöpfe 43, 44 eingesetzt. Der Kolben 39 weist eine Querschnittsverjüngung 45 auf, in dessen Bereich die Böden 46, 47 der Federtöpfe 43, 44 mit der Querschnittsverjüngung 45 entsprechenden Aussparungen 48, 49 verschiebbar gelagert sind. Die Federtöpfe 43, 44 sind auf dem Kolben 39 ausschließlich im Bereich der Querschnittsverjüngung 45 verschiebbar. Eine Abstützung der Federtöpfe 43, 44 innerhalb des Druckraumes 41 erfolgt im Bereich von Topföffnungen 50, 51 und zwar durch entsprechende Ränder 52, 53 gegenüber damit korrespondierenden Absätzen 54, 55 im Bereich des Druckraums 41. Der Kolben 39 ist im Druckraum 41 bis zu einem Bereich unterhalb der Zuleitung 33 verschiebbar. Zur Dämpfung der Kolbenbewegung bei einem mit Hydraulikflüssigkeit gefüllten Druckraum 41 weist letzterer einen Bereich mit einem verjüngten Querschnitt 56 bzw. 61 auf, in den der Kolben 39 mit einem Kolbenende 62 hineinbewegbar ist. Vorzugsweise ist der Bereich 56 konisch ausgebildet, so daß die Dämpfung um so größer wird, je weiter sich der Kolben 39 in den Bereich hineinbewegt.

In einer nicht gezeigten Ausführungsform ist das Kolbenende 62 konisch und der Bereich 56 mit etwa gleichbleibendem Querschnitt ausgebildet. Weiterhin kann der Bereich 56 eine zusätzliche, als Blende im hydraulischen Kreis wirkende Querschnittsverengung aufweisen. Die Dämpfung der Kolbenbewegung in den Bereich 56 wird auf diese Weise weitgehend temperatur- und viskositätsunabhängig. In Umkehrung hierzu kann auch das Kolbenende 62 eine an einen Querschnitt im Stirnbereich anschließende Querschnittsverjüngung aufweisen.

Der Bereich des Gehäuses 27 rechts vom Querbolzen 35 ist zu dem zuvor beschriebenen linken Bereich symmetrisch. Davon ausgenommen ist das das Gehäuse 27 umgebende Teilgehäuse 28, welches mit dem Querbolzen 35 fest verbunden ist und der Übertragung der Bewegung des Querbolzens 35 auf das Ende 15 der Kolben-Zylinder-Anordnung 13 dient. Zur Hindurchführung der Zuleitung 34 weist das Teilgehäuse 28 in dessen Bereich ein gestrichelt gezeichnetes Langloch 57 auf. Eine Bewegung des Querbolzens 35 durch Beaufschlagung einer der beiden Kolben (Kolben 39 links oder Kolben 58 rechts) bewirkt unmittelbar ein Auseinanderbewegen des Anlenkpunktes 31 gegenüber dem Ende 15.

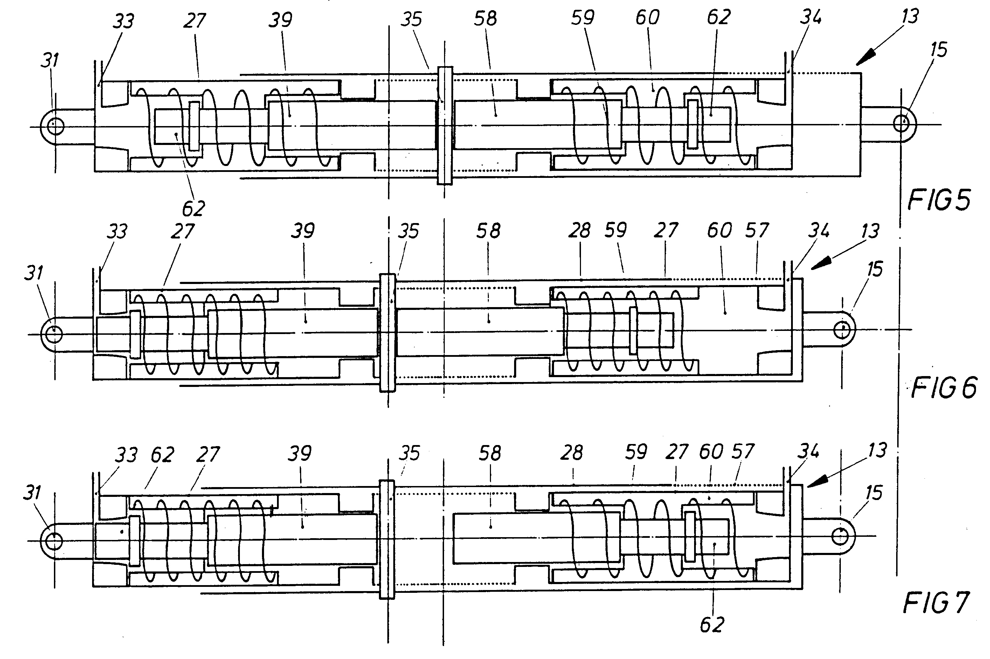

Die Figuren 2 und 5 zeigen die Kolben-Zylinder-Anordnung 13 in derselben Position, nämlich in der Neutralstellung. Davon ausgehend zeigen die Figuren 3, 4 eine Rechtsbewegung des Querbolzens 35 und die Figuren 6, 7 eine Linksbewegung des Querbolzens.

Der Druckraum 41 ist in der Figur 3 gestrichelt dargestellt. Dies soll einen erhöhten Druck der Hydraulikflüssigkeit andeuten. Der Kolben 39 ist dementsprechend unter Mitnahme der Querbolzens 35 und des Teilgehäuses 28 nach rechts bewegt. Die Druckfedern 42, 59 beider Kolben 39, 58 sind durch diese Bewegung zusammengedrückt. Der Zustand gemäß Figur 3 entspricht einem Zustand, der nach einer Drehbewegung der Schaltachse 11 in Richtung des Pfeils 30a gemäß Figur 1, d. h. nach Einlegen eines Ganges, vorliegt. Das nicht näher beschriebene Schaltgetriebe ist so aufgebaut, daß ein eingelegter Gang solange eingelegt bleibt, bis das übertragene Moment ein gewisses Minimum unterschreitet. Danach fällt der Gang von selbst oder durch Unterstützung der Kolben-Zylinder-Anordnung 13 heraus. damit die Rückstellbewegung möglichst schnell und ohne Dämpfung erfolgen kann, wird der Druckraum 41 bereits unmittelbar nach dem Einlegen des Ganges wieder entlastet. Durch die Wirkung der Druckfeder 42 kehrt der Kolben 39 in seine Ausgangsstellung - wie in der Figur 4 gezeigt - zurück, während der Querbolzen 35 in seiner Position entsprechend Figur 3 verbleibt. Die Druckfeder 59 bewirkt eine Rückstellung des Querbolzens 35 ohne einen Druckaufbau im rechten Druckraum 60, sobald das Getriebe eine derartige Rückstellbewegung zuläßt.

Die Figur 6 zeigt eine Beaufschlagung des rechten Druckraumes 60 (gestrichelt dargestellt). Ausgehend von der Neutralstellung gemäß Figur 5 wird hier der Querbolzen 35 und damit das Teilgehäuse 28 auf dem Gehäuse 27 nach links verschoben, d. h. der Abstand zwischen Anlenkpunkt 31 und Ende 15 verkürzt sich. Im übrigen läuft der Vorgang in den Figuren 6 und 7 spiegelbildlich zu den Figuren 3 und 4 ab.

In einer anderen, hier nicht gezeigten Ausführungsform sind die Funktionen der Schaltachse 11 vertauscht. Das Einlegen eines Ganges erfolgt nicht, wie zuvor beschrieben, durch Drehung der Schaltachse, sondern durch axiale Verschiebung. Entsprechend ist auch die Kolben-Zylinder-Anordnung 13 so angeordnet, daß durch sie die Axialbewegung steuerbar ist.

## Patentansprüche

1. Einrichtung zur automatischen Schaltung eines einem Antriebsmotor nachgeschalteten mehrgängigen Zahnrad-Wechselgetriebes für Fahrzeuge, mit Kolben-Zylinder-Anordnungen (12, 13) zum Ausführen einer Schwenkbewegung und zum Ausführen einer Zug-Schub-Bewegung einer Schaltachse (11) zur Anwahl einer Schaltgasse und zum Einlegen eines Ganges, wobei zumindest die Kolben-Zylinder-Anordnung zum Einlegen des Ganges ein Mitnehmerorgan (35) aufweist, das durch einander gegenüberliegend angeordnete, getrennt voneinander beaufschlagbare und entgegengesetzt wirkende Kolben (39, 58) verstellbar ist und wobei jeder Kolben durch Rückstellmittel (42, 59) entgegen seiner Wirkungsrichtung in Richtung auf eine Neutralstellung zurückbewegbar ist, dadurch gekennzeichnet, daß jeder Kolben (39, 58) sowohl in Richtung auf das Mitnehmerorgan (35) als auch entgegengesetzt wirkende Rückstellmittel (42, 59) aufweist, und daß jeder Kolben (39, 58) durch seine Rückstellmittel (42, 59) unabhängig von dem anderen Kolben (39 oder 58) in Richtung auf die Neutralstellung zurückbewegbar ist.

2. Einrichtung nach Anspruch 1, dadurch gekennzeichnet, daß jeder Kolben (39, 58) als Rückstellmittel ein doppelt wirkendes Federelement, insbesondere eine beidseitig beaufschlagbare Druckfeder (42, 59) aufweist, die vorzugsweise parallel, insbesondere koaxial zu den Kolben (39, 58) angeordnet ist.

3. Einrichtung nach Anspruch 2, dadurch gekennzeichnet, daß jedes druckaufnehmende Ende der Druckfeder (42 oder 59) gegenüber dem Kolben (39 oder 58) verschiebbar gelagert ist, wobei jeder Kolbenbewegung jeweils ein Ende gegenüber dem Kolben (39, 58) verschiebbar ist, während das andere Ende am Kolben festliegt.

4. Einrichtung nach einem der Ansprüche 1 bis 3, dadurch gekennzeichnet, daß die Kolben (39, 58) in einem Gehäuse (27) mit zwei voneinander getrennten Druckräumen (41, 60) angeordnet sind, wobei ein zwischen den Druckräumen liegender Leerraum (38) zur Aufnahme des Mitnehmerorgans (35) vorgesehen ist.

5. Einrichtung nach Anspruch 4, dadurch gekennzeichnet, daß die Bereiche zwischen dem Leerraum (38) und den Druckräumen (41, 60) als die Kolben (39, 58) führende und abdichtende Zylinderwandungen (40) ausgebildet sind.

6. Einrichtung nach Anspruch 5, dadurch gekennzeichnet, daß jeder Kolben (39, 58) in einem über den innerhalb der Zylinderwandungen geführten Bereich (40) hinausgehenden Teil - im Bereich des Druckraumes (41 oder 60) - eine Querschnittsverjüngung (45) aufweist, zur Aufnahme von Abstützelementen für die Rückstellmittel bzw. die Druckfedern (42, 59).

7. Einrichtung nach Anspruch 6, dadurch gekennzeichnet, daß als Abstützelemente für jede Druckfeder (42, 59) zwei Federtöpfe (43, 44), mit folgenden Merkmalen vorgesehen sind:
- Der Boden (46) eines jeden Federtopfes (43) weist eine Aussparung (48) zur Aufnahme des Kolbens (39) auf,
- die Böden (46, 47) der Federtöpfe (43, 44) einer Druckfeder (42 oder 59) sind einander zugewandt und im Bereich der Querschnittsverjüngung (45) des Kolbens (39) angeordnet.

8. Einrichtung nach einem der Ansprüche 4 bis 7, dadurch gekennzeichnet, daß jeder Druckraum (41, 60) an seinem vom Mitnehmerorgan (35) abgewandten Bereich einen verjüngten Querschnitt (56, 61) zur Aufnahme des Kolbenende (62) aufweist.

9. Einrichtung nach Anspruch 8, dadurch gekennzeichnet, daß der verjüngte Querschnitt (56, 61) konisch ausgebildet ist.

10. Einrichtung nach Anspruch 8 oder 9, dadurch gekennzeichnet, daß der verjüngte Querschnitt (56, 61) im Bereich des Eintritts des Kolbenendes (62) eine zusätzliche, als Blende wirkende Querschnittsverengung aufweist.

11. Einrichtung nach einem der Ansprüche 4 bis 8, dadurch gekennzeichnet, daß das Kolbenende (62) konisch ausgebildet ist.

12. Einrichtung nach einem der Ansprüche 4 bis 8 oder 12, dadurch gekennzeichnet, daß das Kolbenende (62) eine an einem Querschnitt im Stirnbereich anschließende Querschnittsverjüngung aufweist.

13. Einrichtung nach einem der Ansprüche 1 bis 12, dadurch gekennzeichnet, daß das Mitnehmerorgan (35) mit einem auf dem Gehäuse (27) verschiebbaren Teilgehäuse (28) verbunden ist, wobei das Teilgehäuse vorzugsweise einen Aufnehmer (Ende 15) für eine Verbindung zum Getriebegehäuse oder zur Schalttachse aufweist.

14. Automatisches Schaltgetriebe mit einer eine Schwenk-und Zug-Schub-Bewegung ausführenden Schaltachse gekennzeichnet durch eine Einrichtung nach einem der Ansprüche 1 bis 13.

## Claims

1. Device for the purpose of automatically switching a multi-gear transmission for motor vehicles connected down-stream of a drive motor and comprising piston-cylinder arrangements (12, 13) for the purpose of carrying out a pivot movement and for carrying out a push-pull movement of a switching pin (11) for the purpose of selecting a switching lane and selecting a gear, wherein at least the piston-cylinder arrangement comprises for the purpose of selecting the gear a driver member (35) which can be adjusted by virtue of pistons (39, 58) which are disposed opposite each other and which pistons can be acted upon separately from each other and function in an opposite direction and wherein each piston can be moved back by means of return means (42, 59) against its effective direction in direction of a neutral position, characterised in that each piston (39, 58) comprises return means (42, 59) which function both in the direction of the driver member (35) and also in the opposite direction and that each piston (39, 58) can be moved back by its return means (42, 59) irrespective of the other piston (39 or 58) in the direction of the neutral position.

2. Device according to claim 1, characterised in that each piston (39, 58) comprises as a returns means a double-action resilient member, in particular a compression spring (42, 59), which can be influenced on both sides and which return means is disposed preferably parallel and in particular coaxially to the piston (39,58).

3. Device according to claim 2, characterised in that each pressure-absorbing end of the compression spring (42 or 59) is displaceably mounted with respect to the piston (39 or 58), wherein during each piston movement one end is displaceable in each case with respect to the piston (39,58) whilst the other end is fixed to the piston.

4. Device according to any one of claims 1 to 3, characterised in that the pistons (39, 58) are disposed in a housing (27) having two separate pressure chambers (41, 60), wherein an empty space (38) lying between the pressure chambers is provided for the purpose of accommodating the driver member (35).

5. Device according to claim 4, characterised in that the regions between the empty space (38) and the pressure chambers (41, 60) are designed as cylinder walls (40) which guide and seal the pistons (39, 58).

6. Device according to claim 5, characterised in that for the purpose of accommodating the support members for the return means and the compression springs (42, 59), each piston (39,58) comprises a tapered cross-section (45) in a portion, in the region of the pressure chamber (41 or 60), starting from above the region (40) arranged within the cylinder walls.

7. Device according to claim 6, characterised in that two resilient cups (43, 44) are provided as support members for each compression spring (42, 59) and the said resilient cups comprise the following features:
- the base (46) of each resilient cup (43) comprises a recess (48) for receiving the piston (39),
- the bases (46, 47) of the resilient cups (43, 44) of a compression spring (42 or 59) are facing each other and are disposed in the region of the tapered cross-section (45) of the piston (39).

8. Device according to any one of claims 4 to 7, characterised in that for the purpose of receiving the piston end (62) each pressure chamber (41, 60) comprises at its region remote from the driver member (35) a tapered cross-section (56,61).

9. Device according to claim 8, characterised in that the tapered cross-section (56, 61) is conical in shape.

10. Device according to claim 8 or 9, characterised in that the tapered cross-section (56, 61) comprises in the region of the entry of the piston end (62) an additional reduction in the cross-section which is effective as a shield.

11. Device according to any one of claims 4 to 8, characterised in that the piston end (62) is conical in shape.

12. Device according to any one of claims 4 to 8 or 12, characterised in that the piston end (62) tapers in the cross-section adjacent to a cross-section in the end region.

13. Device according to any one of claims 1 to 12, characterised in that the driver member (35) is connected to a part-housing (28) which can be displaced on the housing (27), wherein the part-housing comprises preferably a receiving device (end 15) for providing a connection to the gear housing or to the switching pin.

14. Automatic switching gear having a switching pin which performs a pivot movement and a push-pull movement and which switching pin is characterised by a device according to any one of claims 1 to 13.

## Revendications

1. Système de sélection automatique pour une boîte de changement de vitesses à engrenages pour automobiles, à plusieurs vitesses, montée à la suite du moteur d'entraînement, avec des dispositifs de vérin (12,13), servant à faire faire un mouvement de traction/coulissement à un axe de sélection (11) pour choisir une voie de commande et pour passer une vitesse, au moins le dispositif de vérin servant à passer la vitesse présentant un organe d'entraînement (35), qui peut être déplacé au moyen de pistons (39,58) disposés en regard l'un de l'autre, pouvant être actionnés séparément l'un de l'autre et agissant en sens contraire et chaque piston pouvant être ramené par des moyens de rappel (42,59), en sens opposé à son sens d'action, en direction d'une position neutre, système caractérisé en ce que chaque piston (39,58) présente des moyens de rappel (42,59), qui agissent dans le sens allant vers l'organe d'entraînement (35), comme aussi en sens contraire et en ce que chaque piston (39,58) peut être ramené par ses moyens de rappel (42,59) indépendamment de l'autre piston (39 ou 58) en direction de la position neutre.

2. Système selon la revendication 1, caractérisé en ce que chaque piston (39,58) présente comme moyen de rappel, un élément élastique à double effet, en particulier un ressort de compression (42,59), pouvant être sollicité des deux côtés, qui est de préférence disposé parallèlement aux pistons (39,58), en particulier de façon coaxiale.

3. Système selon la revendication 2, caractérisé en ce que chaque extrémité des ressorts de compression (42 ou 59), qui reçoit la pression, est montée de façon à pouvoir coulisser par rapport au piston (39 ou 58), une extrémité pouvant coulisser lors de chaque mouvement du piston(39 ou 58) par rapport à celui-ci, tandis que l'autre extrémité reste fixée au piston.

4. Système selon l'une des revendications 1 à 3, caractérisé en ce que les pistons(39,58) sont disposés dans un boîtier (27) avec deux chambres sous pression (41,60) séparées l'une de l'autre, un espace vide (38), qui se trouve entre les chambres sous pression, étant prévu pour recevoir l'organe d'entraînement (35).

5. Système selon la revendication 4, caractérisé en ce que les zones situées entre l'espace vide (38) et les chambres sous pression (41,60) sont constituées comme des parois de cylindres (40) guidant les pistons (39,58) et assurant l'étanchéité.

6. Système selon la revendication 5, caractérisé en ce que chaque piston (39,58) présente dans une partie sortant sur la zone (40) qui passe à l'intérieur des parois de cylindre - dans la zone de la chambre de compression (41 ou 60) - un rétrécissement de la section transversale (45), destiné à recevoir des éléments d'appui pour les moyens de rappel ou les ressorts de compression (42,59).

7. Système selon la revendication 6, caractérisé en ce que l'on prévoit comme éléments d'appui pour chaque ressort de compression (42,59) deux embouts pour ressorts hélicoïdaux (43,44) présentant les particularités suivantes:
- Le fond (46) de chacun des embouts (43) présente un évidement (48) servant à recevoir le piston (39).
- Les fonds (46,47) des embouts (43, 44) de ressorts hélicoïdaux (42 ou 59) sont tournés l'un vers l'autre et sont disposés dans la zone du rétrécissement de la section transversale (45) du piston (39).

8. Système selon l'une des revendications 4 à 7, caractérisé en ce que chaque chambre de compression (41,60) présente dans sa zone située à l'opposé de l'organe d'entraînement (35) une section transversale rétrécie (56,61) qui sert à recevoir l'extrémité de piston (62).

9. Système selon la revendication 8, caractérisé en ce que la section transversale rétrécie (56,61) est constituée de façon conique.

10. Système selon la revendication 8 ou la revendication 9, caractérisé en ce que la section transversale rétrécie (56,61) présente dans la zone d'entrée de l'extrémité du piston (62) un rétrécissement de sa section transversale supplémentaire, agissant comme un diaphragme.

11. Système selon l'une des revendications 4 à 8, caractérisé en ce que l'extrémité du piston (62) est constituée de façon conique.

12. Système selon l'une des revendications 4 à 8 ou 12, caractérisé en ce que l'extrémité du piston (62) présente un rétrécissement de sa section transversale qui fait suite à une section transversale de la zone frontale.

13. Système selon l'une des revendications 1 à 12, caractérisé en ce que l'organe d'entraînement (35) est relié à une partie de boîtier (28) qui peut coulisser sur le boîtier (27), la partie de boîtier (28) présentant de préférence une prise (extrémité 15) pour une liaison avec le carter de la boîte de vitesses ou l'axe de sélection.

14. Boîte de changement de vitesse automatique, avec un axe de commande exécutant un mouvement de pivotement et de traction-coulissement, caractérisée par un système selon l'une des revendications 1 à 13.
